# EUROPÄISCHE PATENTSCHRIFT

(11) **EP 1 151 844 B1**
(45) Veröffentlichungstag und Bekanntmachung des Hinweises auf die Patenterteilung: **26.11.2003**
(21) Anmeldenummer: 00810374.9
(22) Anmeldetag: 03.05.2000
(51) Int. Cl.: B29C 47/04, B29C 41/32, B29C 41/26, B29C 39/20, A61J 3/07

(54) **Verfahren und Vorrichtung zum Herstellen eines flexiblen Bandes aus wenigstens zwei verchiedenen, bei Wärmezufuhr fliessfähigen Massen**
Method and apparatus for manufacturing a flexible band from at least two different materials flowable under the action of heat
Procédé et dispositif pour fabriquer une bande flexible à partir de deux matériaux différents rendus fluides par apport de chaleur

(43) Veröffentlichungstag der Anmeldung: 07.11.2001
(73) Patentinhaber: Swiss Caps Rechte und Lizenzen AG, 9533 Kirchberg (CH)
(72) Erfinder: Peter, Alois, 9500 Wil (CH); Egli, Andreas, 9534 Gähwil (CH)
(74) Vertreter: Wenger, René

(56) Entgegenhaltungen:
- WO-A-94/03316
- US-A- 3 565 737
- US-A- 3 792 945
- US-A- 3 799 718
- US-A- 4 128 386
- US-A- 4 316 868
- US-A- 5 282 731
- US-A- 5 429 856
- US-A- 6 022 499

## Beschreibung

Die Erfindung betrifft ein Verfahren und eine Vorrichtung zum Herstellen eines flexiblen Bandes aus wenigstens zwei verschiedenen, bei Wärmezufuhr fliessfähigen Massen gemäss dem Oberbegriff von Anspruch 1 bzw. von Anspruch 7. Die Herstellung derartiger Bänder mit Hilfe einer Bandgiessvorrichtung in einem kontinuierlichen Verfahren ist beispielsweise ein Verfahrensschritt bei der Herstellung von Weichgelatinekapseln. Durch die Verwendung unterschiedlich eingefärbter Gelatinemassen ist es dabei möglich, an der Kapselhülle ein bestimmtes Muster zu erzielen.

Im Zusammenhang mit der Extrusion von flexiblen Bändern aus thermoplastischem Kunststoffmaterial sind bereits verschiedene Techniken bekannt, um zu Dekorationszwecken oder aus anderen Gründen Bänder aus verschiedenen Materialien herzustellen. Dabei werden durch Koextrusion oder auf andere Weise unterschiedliche Werkstoffe in einem Extrusionswerkzeug zusammengebracht.

So beschreibt beispielsweise die US 3 565 737 ein Verfahren zum Herstellen von Kunststofffolien, bei dem durch simultane Extrusion auf einem Hauptkörper eine kleinere Menge eines unterschiedlichen Materials auf der Oberfläche des Hauptkörpers aufgetragen wird. Die US 3 792 945 beschreibt eine Vorrichtung zum Herstellen von flächigem Kunststoffmaterial mit mehrfarbigem Muster, wobei in einem Extrusionswerkzeug ein erster Materialstrom aufgeteilt wird. Über drehbare Dosierventile kann jedem Teilstrom intermittierend ein zweites Material beigegeben werden. Anschliessend werden die beiden Materialströme wieder vereinigt und aus einer gemeinsamen Extrusionsdüse ausgestossen. Die US 4 128 386 beschreibt eine ähnliche Vorrichtung, wobei jedoch keine Teilströme gebildet werden, sondern auf jeder Seite eines Hauptstroms anders farbige Teilströme zudosiert werden können. Schliesslich beschreibt die US 5 282 731 eine Vorrichtung für die Herstellung von Formkörpern aus thermotropen, flüssigkristallinen Stoffen. Dabei sollen Kunststofffolien mit definierter Orientierung der Ketten in mindestens zwei voneinander unabhängigen Vorzugsrichtungen hergestellt werden. Dies geschieht in einem Adapter mit einer nachgeschalteten Breitschlitzdüse, wobei dem Adapter zwei Teilströme von einem Extruder aus gegebenenfalls unterschiedlichem Kuststoffmaterial zugeführt werden. Die Aufprägung der Vorzugsrichtung erfolgt über ein drehbares Verteilerelement, aus dem einer der Teilströme helixartig in den zweiten Teilstrom eingegeben wird, bevor die beiden vereinten Materialströme aus der Breitschlitzdüse ausgestossen und auf einer Walze abgelegt werden.

Durch die EP B1 653 979 (= WO 94/03316) ist ein gattungsmässig vergleichbares Verfahren bekannt geworden, bei dem die beiden unterschiedlichen Massen aus einem ersten und einem zweiten Auftragskasten ausgegossen werden. Der zweite Auftragskasten ist dabei so innerhalb des ersten Auftragskastens positioniert, dass eine äussere Oberfläche des zweiten Auftragskastens und eine innere Oberfläche des ersten Auftragskastens eine Lücke definieren, durch die die erste fliessfähige Gelatinemasse fliessen kann, so dass ein Grundgelatineband entsteht. Der zweite Auftragskasten weist wenigstens eine Öffnung auf, durch die die zweite fliessfähige Gelatinemasse auf einen Teil des Grundgelatinebandes fliessen kann, so dass das gemusterte Gelatineband entsteht. Ein Nachteil dieses Verfahrens besteht darin, dass die zweite Masse auf die Oberfläche des bereits fertig gebildeten Bandes aus der ersten Masse aufgetragen wird. Dies kann dazu führen, dass die beiden Massen kein homogenes Band bilden, weil sofort nach dem Verlassen des Giessspaltes eine Abkühlung an der Oberfläche stattfindet.

Ein weiterer Nachteil des bekannten Verfahrens besteht aber auch darin, dass die Möglichkeiten der Musterung stark eingeschränkt sind und dass praktisch nur parallel ausgerichtete Muster giessbar sind.

Es ist daher eine Aufgabe der Erfindung, ein Verfahren der eingangs genannten Art zu schaffen, bei dem mit einfachen konstruktiven Mitteln ein möglichst homogenes gemustertes Band hergestellt werden kann, wobei auch komplizierte Muster realisiert werden können. Die Vorrichtung soll in der Handhabung und Wartung möglichst einfach sein. Diese Aufgabe wird in verfahrensmässiger Hinsicht mit einem Verfahren mit den Merkmalen von Anspruch 1 und in vorrichtungsmässiger Hinsicht mit einer Vorrichtung mit den Merkmalen von Anspruch 7 gelöst.

Vorteilhufte weider bildungen der Erfindung sind Gegenstand der betreffenden abhangigen Ansprüche.

Beim erfindungsgemässen Verfahren werden die beiden Massen nicht aus zwei separaten und aneinander angrenzenden Giessöffnungen schichtweise aufeinander gegossen. Vielmehr wird die zweite Masse im Bereich innerhalb des Giessspaltes mit Hilfe der Einspritzdüse in den Giessstrom der ersten Masse injiziert. Dies führt einerseits dazu, dass die zweite Masse von der ersten Masse praktisch vollständig umhüllt werden kann. Das Zusammentreffen der beiden Massen findet dabei aber ausserdem an einer Stelle statt, an der noch eine verhältnismässig hohe Temperatur herrscht und an welcher der Giessstrom noch nicht mit Umgebungsluft in Berührung kommt. Dies führt zu einer homogenen Verbindung der beiden Giessströme und damit insgesamt zu einem homogenen Band, das sich anschliessend problemlos verarbeiten lässt. Gleichzeitig ermöglicht das Ausstossen der zweiten Masse mittels einer Einspritzdüse aber auch vielseitige Möglichkeiten zur Bildung unterschiedlicher Muster.

Der Ausstoss der zweiten Masse kann beispielsweise intermittierend erfolgen, so dass der ausgestossene Materialstrom zeitweise unterbrochen wird. Damit können theoretisch Bänder mit einem Punktmuster oder "Leopardenmuster" hergestellt werden.

Besonders interessante Muster lassen sich zeichnen, wenn die Einspritzdüse während des Ausstossens der zweiten Masse bewegt wird. Damit lassen sich Wellenlinien, Schlangenlinien, aber auch geschlossene Schlaufen und dergleichen zeichnen.

Besonders vorteilhaft wird bezogen auf die Längsrichtung des Giessspaltes aus mehreren Einspritzdüsen wenigstens eine zweite Masse ausgestossen, wobei die Einspritzdüsen derart gegenläufig bewegt werden, dass sich die Materialströme der zweiten Masse kreuzen. Bei einer derartigen Düsenführung können sich kreuzende Linien am Band erzeugt werden. Einzige Voraussetzung ist dabei, dass die Einspritzdüsen bei der Bewegung nicht miteinander kollidieren, indem sie beispielsweise auf unterschiedlichen Ebenen oder bogenförmig aufeinander zu bewegt werden.

Es ist schliesslich auch denkbar, dass bezogen auf die Breite des Giessspaltes aus wenigstens zwei nebeneinander angeordneten Einspritzdüsen wenigstens eine zweite Masse ausgestossen wird. Dies erweitert die Vielfalt der möglichen Muster noch weiter und es ist zudem möglich, in Vorschubrichtung des Bandes dauernd oder vorübergehend die Menge der zweiten Masse besser zu dosieren. Selbstverständlich könnten aber auch zwei verschiedene Massen ausgestossen werden, so dass das Muster auf der Vorderseite und auf der Rückseite des Bandes beispielsweise eine andere Farbe aufweist.

Das Verfahren wird schliesslich vorteilhaft als Bestandteil eines Kapselherstellungsverfahrens zur Herstellung gemusterter Weichkapseln aus zwei flexiblen Bändern im Rotary-Die-Verfahren eingesetzt. Es muss sich dabei nicht zwingend um Gelatine handeln. Auch andere biopolymere Massen könnten auf die gleiche Weise zu Kapseln verarbeitet werden. Das Verfahren eignet sich aber nicht nur zum Herstellen gemusterter Kapseln, sondern beispielsweise auch für andere aus einem bandförmigen Zwischenprodukt hergestellten Erzeugnisse, wie z.B. tiefgezogene Verpackungseinlagen, Beutel und vieles mehr. Der Unterschied zwischen den Massen muss sich nicht zwangsläufig auf die unterschiedliche Farbe beschränken. Es wäre durchaus auch denkbar, Massen von gleicher Farbe, jedoch mit anderen Materialeigenschaften miteinander zu kombinieren, z.B. eine Masse mit fluoreszierenden Farbpigmenten oder eine Masse mit unterschiedlichen Festigkeitseigenschaften zum Erzeugen einer Sollbruchstelle und vieles mehr. Ausserdem können so viele unterschiedliche Massen in den Giessspalt ausgestossen werden, wie Einspritzdüsen vorhanden sind.

Die Öffnung der Einspritzdüse mündet innerhalb des Giessspaltes, wobei sie vorzugsweise gegenüber der Ebene des Giessspaltes etwas zurückversetzt ist.

Die bewegliche Lagerung der Einspritzdüse im Giessbehälter kann auf unterschiedliche Weise gelöst werden. Besonders vorteilhaft ist die Einspritzdüse jedoch am Ende eines Zufuhrrohres angeordnet, das durch eine Seitenwand des Giessbehälters geführt ist und das gelenkig an dieser gelagert ist. Auf diese Weise können auch ganze Reihen von Einspritzdüsen nebeneinander gelagert werden. Als Lagergelenk dient dabei vorzugsweise ein Kugelgelenk, so dass die Düsen auch kreisförmig geschwenkt werden können.

Die Zufuhrrohre sind vorteilhaft mit einem ausserhalb des Giessbehälters angeordneten Manipulator einzeln oder gruppenweise bewegbar.

Wenigstens zwei Einspritzdüsen sind vorteilhaft derart beweglich nebeneinander angeordnet, dass sie sich bezogen auf die Längsrichtung des Giessspaltes kreuzen können.

Weitere Vorteile und Einzelmerkmale der Erfindung ergeben sich aus der nachfolgenden Beschreibung eines Ausführungsbeispiels und aus den Zeichnungen. Es zeigen:
- Figur 1: eine schematische Darstellung einer Verkapselungsmaschine nach dem Rotary-Die-Verfahren,
- Figur 2: einen Querschnitt durch einen Giessbehälter,
- Figur 3: der Giessbehälter gemäss Figur 2 in perspektivischer Darstellung,
- Figur 4: eine schematische Darstellung der Bewegungsmöglichkeit von Einspritzdüsen, und
- Figuren 5 bis 10: verschiedene Ausführungsbeispiele von möglichen Mustern an einem Band.

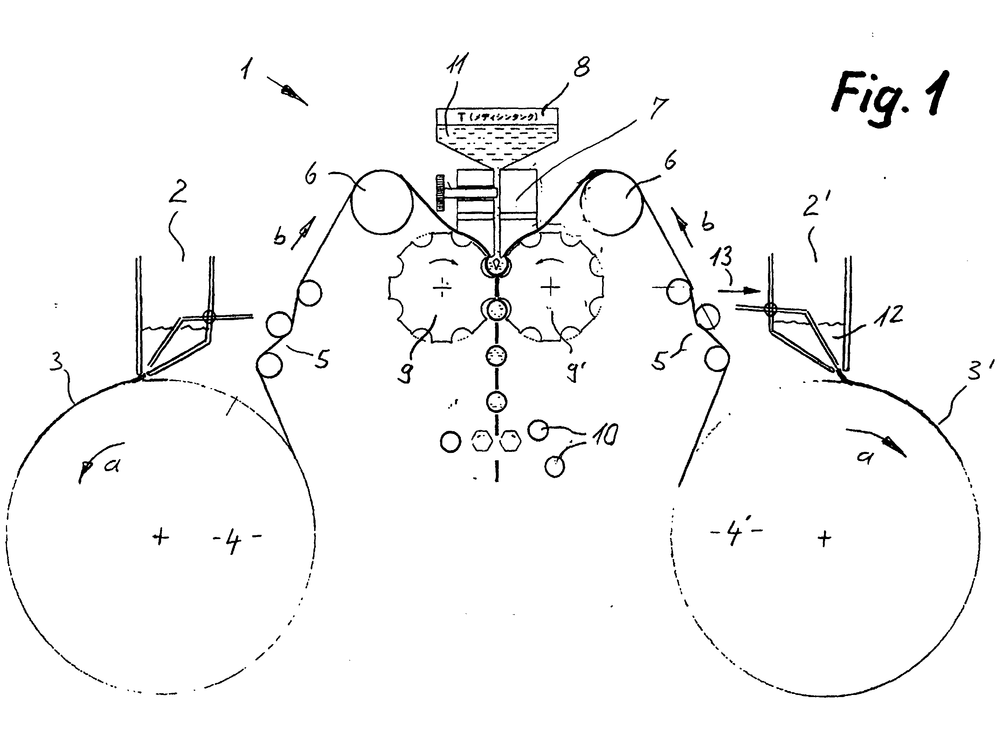

Figur 1 zeigt schematisch eine Verkapselungsmaschine 1, die nach dem seit vielen Jahren bekannten Rotary-Die-Verfahren arbeitet. Zur Technologie dieses Verfahrens wird im Übrigen verwiesen auf Fahrig et al. (Herausgeber) "Die Kapsel" Stuttgart 1983. Aus hier nicht näher dargestellten Gelatinevorratsbehältern fliesst ca. 60°C warme Gelatinemasse zu den beiden Bandgiessvorrichtungen 2, 2', die sich über den Kühltrommeln 4, 4' auf beiden Seiten der eigentlichen Verkapselungseinheit befinden. Wie nachstehend noch näher beschrieben wird, kann aus jeder Bandgiessvorrichtung ein Band 3, 3' bestehend aus einer ersten Masse 12 und einer zweiten Masse 13 auf die sich in Pfeilrichtung a drehende Kühltrommel gegossen werden. Das Gelatineband kann dabei eine Dicke von ca. 0.5 bis 1.0 mm aufweisen. Auf der Kühltrommel kühlt das Band ab und erhält dabei eine gummiartige, elastische Konsistenz.

Jedes Band 3, 3' wird in Pfeilrichtung b über Ölrollen 5 geführt, welche die Oberfläche mit einem Ölfilm versehen. Umlenkwalzen 6 führen die Bänder dann in den Einzugsbereich der Formwalzen 9, 9', die sich gegensinnig drehen und die die beiden Bänder zu Kapseln 10 zusammenschweissen. Das Füllgut 11 wird aus einem Füllgutbehälter 8 über den sogenannten Füllkeil 7 in den Formhohlraum eingeführt, bevor die beiden Bänder zusammengepresst werden.

Auf diese Weise lassen sich einzeln dosierte Kapseln von unterschiedlicher Form und Grösse in einem kontinuierlichen Verfahren herstellen. Es kann sich dabei um Kapseln für pharmazeutische oder diätetische Zwecke handeln. Aber auch Kapseln für technische Zwecke z.B. mit Waschmittel gefüllte Kapseln oder mit Farbstoff gefüllte Kapseln (paint balls) lassen sich auf diese Weise produzieren. Das Band muss dabei nicht zwingend online dem Verkapselungsverfahren zugeführt werden. Es wäre auch denkbar, ein Band herzustellen und aufzurollen, um es zu einem späteren Zeitpunkt zu verarbeiten. Bei der Kühlvorrichtung muss es sich nicht zwingend um eine Kühltrommel handeln. Denkbar wäre auch das Ausgiessen auf ein gekühltes Förderband oder gar das Ausgiessen in ein Kühlbad.

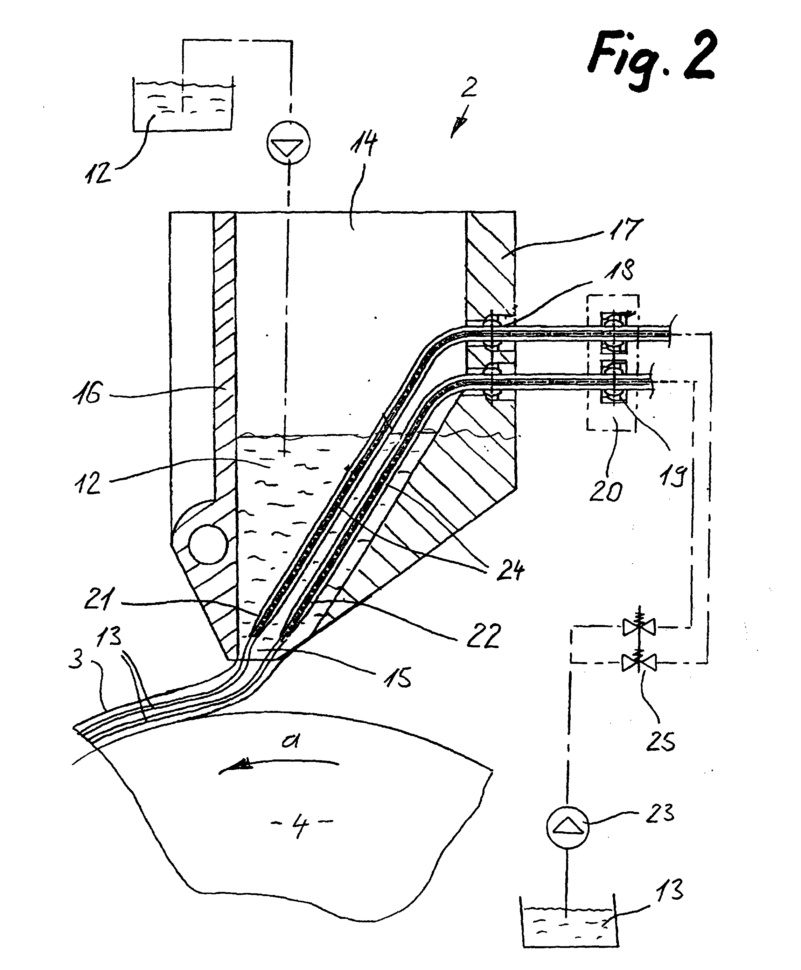

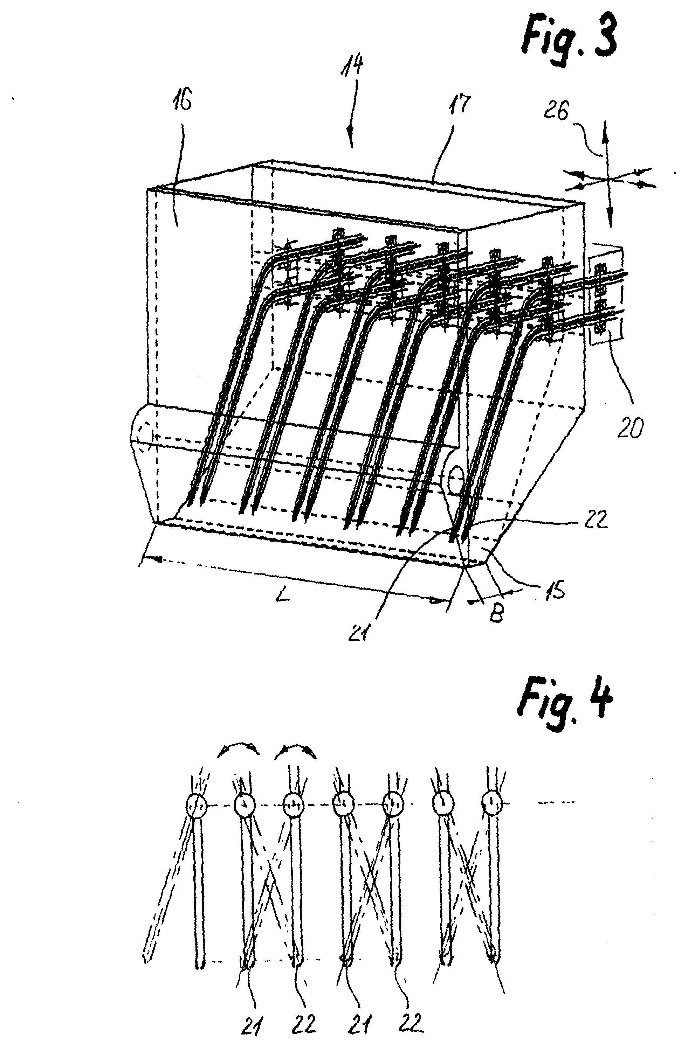

Die Figuren 2 und 3 zeigen Einzelheiten einer erfindungsgemässen Bandgiessvorrichtung 2. Der Giessbehälter 14 oder die sogenannte "spreader box" besteht vorzugsweise aus einer beweglichen Justierwand 16 und einer festen Seitenwand 17. Auf diese Weise lässt sich ein Giessspalt 15 mit der Länge L und mit einer justierbaren Breite B definieren. In Längsrichtung L des Giessspalts sind mehrere Einspritzdüsen 21, 22 nebeneinander angeordnet, wobei diese zwei Reihen bilden, die bezogen auf die Breite B des Giessspaltes bzw. auf die Vorschubrichtung des Bandes 3 hintereinander liegen. Jede Einspritzdüse ist am Ende eines Zufuhrrohrs 24 angeordnet, das etwas abgebogen ist und das die feste Seitenwand 17 durchdringt. Jedes Zufuhrrohr ist dabei in einem Kugelgelenklager 18 separat gelagert.

Im Abstand zur festen Seitenwand 17 sind die Zufuhrrohre in einem Manipulator 20 gehalten und dort ebenfalls in Gelenklagern 19 geführt. Die beiden Reihen 21 und 22 von Einspritzdüsen können dabei in separaten Manipulatoren gehalten sein, und es wäre sogar denkbar, dass jede Einspritzdüse individuell manipuliert werden kann. Wie in Figur 3 angedeutet, kann der Manipulator 20 die Zufuhrrohre 24 und damit die einzelnen Einspritzdüsen 21, 22 in verschiedenen Raumachsen 26 bewegen. Der Manipulator könnte dabei mit einem programmierbaren Rechner verbunden sein, der die einzelnen Bewegungsabläufe steuert.

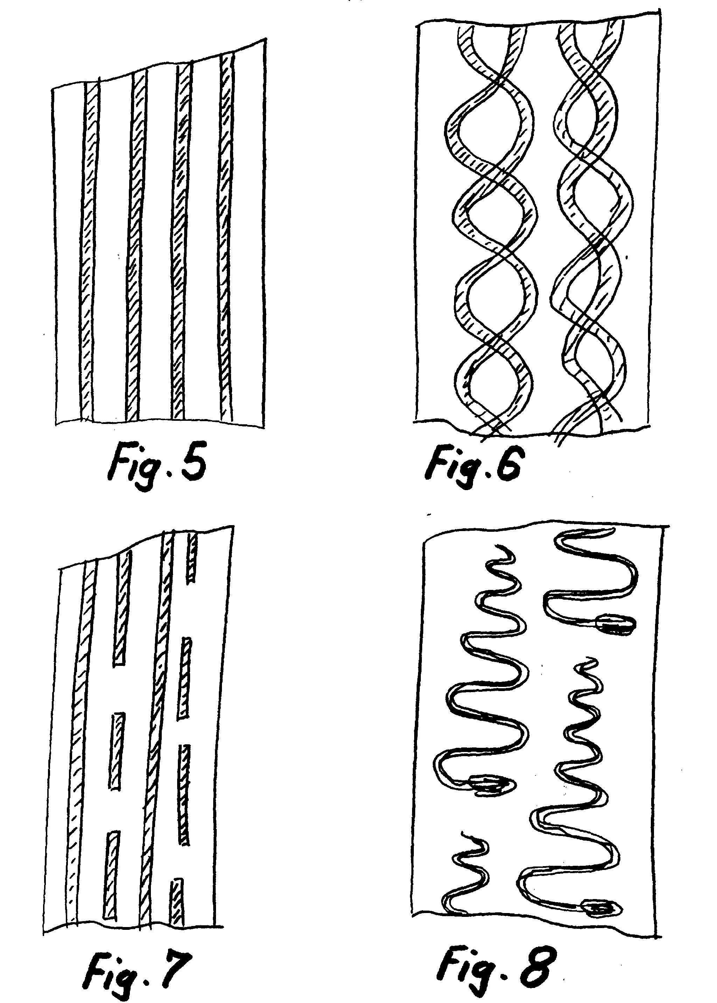

Der Manipulator ist beispielsweise in der Lage, die Düsen 21, 22 derart gegenläufig zu bewegen, dass sie sich kreuzen. Dies ist in Figur 4 schematisch dargestellt. Die Einspritzdüsen 21, 22 führen dabei gegenläufige Schwenkbewegungen aus, wobei sich die Bahn der ausgestossenen Massen kreuzt.

Gemäss Figur 2 wird die erste Masse 12 derart in den Giessbehälter 14 gepumpt, dass das Niveau unterhalb der Gelenke 18 liegt. Die zweite Masse 13 gelangt beispielsweise über eine Dosierpumpe 23 und/oder über Dosierventile 25 in die Zufuhrrohre 24. Es wäre dabei auch möglich, die beiden Reihen von Einspritzdüsen 21, 22 mit unterschiedlichen Massen zu speisen bzw. jeweils zwischen zwei unterschiedlichen Massen umzuschalten.

Unmittelbar am Austritt der Einspritzdüsen 21, 22 vereinigen sich die beiden Massen 12 und 13 zu einem einzigen Giessstrom, der durch den Giessspalt 15 den Giessbehälter verlässt und als homogenes Band 3 auf die Kühltrommel 4 gelangt.

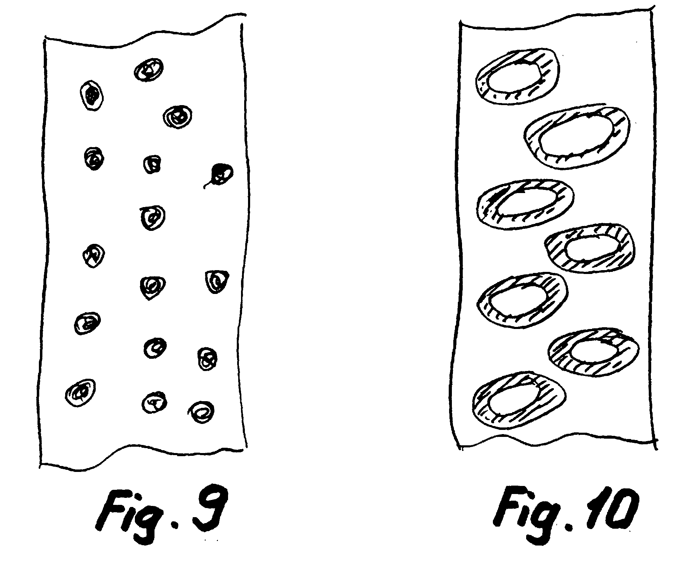

Die Figuren 5 bis 10 zeigen lediglich beispielsweise die Vielfalt der möglichen Muster, die sich mit dem erfindungsgemässen Verfahren bzw. mit der Vorrichtung an einem Band zeichnen lassen. Neben einfachen parallelen Streifen gleicher oder unterschiedlicher Farbe gemäss Figur 5 können gemäss Figur 6 auch ineinander verschlungene Streifenmuster dargestellt werden. Figur 7 zeigt ein Muster mit durchgehenden und mit unterbrochenen Streifen. Figur 8 zeigt ein Muster mit symbolischen Schlangen, das dadurch hergestellt wird, dass zu Beginn als Schlangenkopf eine relativ grosse Menge der zweiten Masse ausgestossen wird und dass anschliessend mit reduziertem Ausstoss eine sich verkleinernde Schlangenlinie gezeichnet wird. Gemäss Figur 9 kann die zweite Masse auch nur punktförmig in das Band gezeichnet werden, wobei die Punkte auch so gesetzt werden können, dass sie sich teilweise zu einem Leopardenmuster vereinigen. Unter entsprechender Berücksichtigung der Fliessgeschwindigkeit können gemäss Figur 10 auch kreisförmige oder elliptische Muster gezeichnet werden.

## Patentansprüche

1. Verfahren zum Herstellen eines flexiblen Bandes (3) aus wenigstens zwei verschiedenen, bei Wärmezufuhr fliessfähigen Massen (12, 13), insbesondere aus einem Biopolymer, wobei die Massen im fliessfähigen Zustand derart gemeinsam aus einer Bandgiessvorrichtung (2) als Band auf eine Kühlvorrichtung (4) ausgegossen werden, dass die beiden Massen am Band ein bestimmtes Muster bilden, **dadurch gekennzeichnet, dass** wenigstens eine erste Masse (12) aus einem Giessspalt (15) an einem Giessbehälter ausgegossen wird und dass wenigstens eine zweite Masse (13) mittels wenigstens einer Einspritzdüse (21, 22) bis in einen Bereich innerhalb des Giessspaltes geführt und dort in den Giessstrom der ersten Masse derart ausgestossen wird, dass die zweite Masse von der ersten Masse umhüllt wird.

2. Verfahren nach Anspruch 1, **dadurch gekennzeichnet, dass** der Ausstoss der zweiten Masse (13) intermittierend erfolgt.

3. Verfahren nach Anspruch 1 oder 2, **dadurch gekennzeichnet, dass** die Einspritzdüse (21, 22) während des Ausstossens der zweiten Masse (13) bewegt wird.

4. Verfahren nach Anspruch 3, **dadurch gekennzeichnet, dass** bezogen auf die Längsrichtung (L) des Giessspaltes (15) aus mehreren Einspritzdüsen wenigstens eine zweite Masse (13) ausgestossen wird, wobei die Einspritzdüsen derart gegenläufig bewegt werden, dass sich die Materialströme der zweiten Masse kreuzen.

5. Verfahren nach einem der Ansprüche 1 bis 4, **dadurch gekennzeichnet, dass** bezogen auf die Breite (B) des Giessspaltes (15) aus wenigstens zwei nebeneinander angeordneten Einspritzdüsen (21, 22) wenigstens eine zweite Masse (13) ausgestossen wird.

6. Verfahren nach einem der Ansprüche 1 bis 5, als Bestandteil eines Kapselherstellungsverfahrens zur Herstellung gemusterter Weichkapseln aus zwei flexiblen Bändern (3, 3') im Rotary-Die-Verfahren.

7. Vorrichtung zum Herstellen eines flexiblen Bandes (3) aus wenigstens zwei verschiedenen, bei Wärmezufuhr fliessfähigen Massen (12, 13), insbesondere aus einem Biopolymer, mit einem Giessbehälter (14), der wenigstens einen Giessspalt (15) zum Ausgiessen wenigstens einer ersten Masse (12) aufweist und mit einer innerhalb des Giessbehälters (14) angeordneten Zufuhrvorrichtung für wenigstens eine zweite Masse (13), wobei die beiden Massen im fliessfähigen Zustand derart gemeinsam auf eine Kühlvorrichtung (4) ausgiessbar sind, dass sie am Band ein bestimmtes Muster bilden, **dadurch gekennzeichnet, dass** die Zufuhrvorrichtung für die zweite Masse (13) wenigstens eine Einspritzdüse (21, 22) ist, deren Öffnung derart in einem Bereich innerhalb des Giessspaltes (15) mündet, dass die zweite Masse von der ersten Masse umhüllbar ist.

8. Vorrichtung nach Anspruch 7, **dadurch gekennzeichnet, dass** die zweite Masse (13) aus der Einspritzdüse (21, 22) mittels einer Dosiervorrichtung (23) intermittierend ausstossbar ist.

9. Vorrichtung nach Anspruch 7 oder 8, **dadurch gekennzeichnet, dass** die Einspritzdüse (21, 22) beweglich im Giessbehälter (14) gelagert ist.

10. Vorrichtung nach Anspruch 9, **dadurch gekennzeichnet, dass** bezogen auf die Längsrichtung (L) des Giessspaltes (15) mehrere Einspritzdüsen nebeneinander im Giessbehälter (14) angeordnet sind, welche simultan oder individuell beweglich sind.

11. Vorrichtung nach Anspruch 9 oder 10, **dadurch gekennzeichnet, dass** bezogen auf die Breite (B) des Giessspaltes (15) wenigstens zwei Einspritzdüsen (21, 22) nebeneinander angeordnet sind.

12. Vorrichtung nach einem der Ansprüche 9 bis 11, **dadurch gekennzeichnet, dass** die Einspritzdüsen (21, 22) an den Enden von Zufuhrrohren (24) angeordnet sind, welche durch eine Seitenwand (17) des Giessbehälters (14) geführt sind und an dieser gelenkig gelagert sind.

13. Vorrichtung nach Anspruch 12, **dadurch gekennzeichnet, dass** die Zufuhrrohre (24) mit einem ausserhalb des Giessbehälters (14) angeordneten Manipulator (20) einzeln oder gruppenweise bewegbar sind.

14. Vorrichtung nach Anspruch 10 und einem der Ansprüche 11 bis 13, **dadurch gekennzeichnet, dass** wenigstens zwei Einspritzdüsen derart beweglich nebeneinander angeordnet sind, dass sie sich bezogen auf die Längsrichtung (L) des Giessspaltes (15) kreuzen können.

15. Vorrichtung nach einem der Ansprüche 7 bis 14 als Bestandteil einer Kapselherstel lungsmaschine (1) zur Herstellung gemusterter Weichkapseln aus zwei flexiblen Bändern (3, 3') im Rotary-Die-Verfahren.

## Claims

1. Method for manufacturing a flexible strip (3) from at least two different materials (12, 13) rendered flowable by the action of heat, more particularly from a biopolymer, in the flowable state the materials being cast jointly as one strip from a strip casting machine (2) onto a cooling machine (4), in such a manner that the two materials create a certain pattern on the strip, **characterised in that** at least one first material (12) is cast from a casting nip (15) on a casting tank and that at least one second material (13) is guided by means of at least one injection nozzle (21, 22) into a zone within the casting nip, and from there output into the casting stream of the first material in such a way that the second material is enveloped by the first material.

2. Method according to claim 1, **characterised in that** the output of the second material (13) is intermittent.

3. Method according to claim 1 or 2, **characterised in that** the injection nozzle (21, 22) is in motion whilst the second material (13) is being output.

4. Method according to claim 3, **characterised in that** based on the longitudinal direction (L) of the casting nip (15) at least one second material (13) is cast from a plurality of injection nozzles, the injection nozzles moving in opposite directions in such a way that the streams of the second material cross.

5. Method according to any of claims 1 to 4, **characterised in that** based on the width (B) of the casting nip (15) at least one second material (13) is cast from at least two injection nozzles (21, 22) arranged alongside one another.

6. Method according to any of claims 1 to 5, as part of a capsule manufacturing process for producing patterned soft capsules from two flexible strips (3, 3') by the rotary die process.

7. Apparatus for producing a flexible strip (3) from at least two different materials (12, 13) rendered flowable under the action of heat, more particularly from a biopolymer, comprising a casting tank (14) featuring at least one casting nip (15) for casting at least one first material (12) and comprising a feeder device, arranged inside the casting tank (14), for at least one second material (13), in the flowable state the two materials being able to be jointly cast onto a cooling machine (4) in such a way that they create a certain pattern on the strip, **characterised in that** the feeder device for the second material (13) is at least one injection nozzle (21, 22) the aperture of which opens out into a zone inside the casting nip (15) in such a manner that the second material can be enveloped by the first material.

8. Apparatus according to claim 7, **characterised in that** the second material (13) can be output in intermittent fashion from the injection nozzle (21, 22) by means of a metering device (23).

9. Apparatus according to claim 7 or 8, **characterised in that** the injection nozzle (21, 22) is mounted in the casting tank (4) so as to be movable.

10. Apparatus according to claim 9, **characterised in that** based on the longitudinal direction (L) of the casting nip (15) a plurality of injection nozzles are arranged alongside one another in the casting tank (14) and are adapted to move simultaneously or individually.

11. Apparatus according to claim 9 or 10, **characterised in that** based on the width (B) of the casting nip (15) at least two injection nozzles (21, 22) are arranged alongside one another.

12. Apparatus according to any of claims 9 to 11, **characterised in that** the injection nozzles (21, 22) are arranged at the ends of feeder pipes (24) which pass through a side wall (17) of the casting tank (14) and are flexibly mounted thereon.

13. Apparatus according to claim 12, **characterised in that** the feeder pipes (24) are adapted to be moved individually or in groups by a manipulator (20) arranged outside the casting tank (14).

14. Apparatus according to claim 10 and any of claims 11 to 13, **characterised in that** at least two injection nozzles are arranged alongside one another so as to be movable in such a way that based on the longitudinal direction (L) of the casting gap (15) they are able to cross paths.

15. Apparatus according to any of claims 7 to 14 as part of a capsule manufacturing machine (1 ) for producing patterned soft capsules from two flexible strips (3, 3') by the rotary die process.

## Revendications

1. Procédé pour produire une bande flexible (3) à partir d'au moins deux pattes différentes (12,13) qui sont rendues fluide par apport de chaleur, en particulier d'un bio polymère, les pattes étant coulées à l'état fluide ensemble de telle manière, au moyen d'un dispositif de coulée de bandes (2), en forme de bande sur un dispositif de refroidissement (4), de telle manière que les deux pattes forment sur la bande un motif déterminé, **caractérisé en ce qu'**au moins une première patte (12) est coulée à la sortie d'une fente de coulée (15) formée sur un récipient de coulée, et **en ce qu'**au moins une deuxième patte (13) est guidée, au moyen d'au moins une buse d'injection (21, 22) jusque dans une région située à l'intérieur de la fente de coulée, et la est expulsé dans le courant de coulée de la première patte de manière que la deuxième patte soit entourée de la première patte.

2. Procédé selon la revendication 1, **caractérisé en ce que** l'expulsion de la deuxième patte (13) se produit par intermittence.

3. Procédé selon la revendication 1 ou 2, **caractérisé en ce que** la buse d'injection (21, 22) est mise en mouvement pendant l'expulsion de la deuxième patte (13).

4. Procédé selon la revendication 3, **caractérisé en ce que**, rapportée à la direction longitudinale (L) de la fente de coulée (15), au moins une deuxième patte (13) est expulsée à partir de plusieurs buses d'injection, les buses d'injection étant mises en mouvement l'une en sens inverse de l'autre de telle manière que les courants de matière de la deuxième patte se croise.

5. Procédé selon une des revendications 1 à 4, **caractérisé en ce que** rapportée à la largeur (B) de la fente de coulée (15), au moins une deuxième masse (13) est expulsée d'au moins deux buses d'injection (21, 22) disposées l'une à coté de l'autre.

6. Procédé selon une des revendications 1 à 5, faisant partie d'un procédé de production de capsules, pour la production de capsules molles décorées à partir de deux bandes flexibles (3, 3') dans le procédé aux moules rotatifs.

7. Dispositif pour produire une bande flexible (3) à partir de deux pattes différentes (12, 13) qui sont fluides sous l'effet d'un apport de chaleur, en particulier d'un bio polymère, comprenant un récipient de coulée (14) qui présente au moins une fente de coulée (15) pour la coulée d'au moins une première patte (12) et un dispositif d'amené disposé à l'intérieur du récipient de coulée (14), pour au moins une deuxième patte (13), les deux pattes pouvant être coulées en commun, à l'état fluide, sur un dispositif de refroidissement (4) de telle manière qu'elles forment sur la bande un certain motif, **caractérisé en ce que** le dispositif d'amené pour la deuxième patte (13) et au moins une buse d'injection (21, 22) dont l'ouverture débouche à l'intérieur de la fente de coulée (15) de telle manière que la deuxième patte puisse être entourée de la première patte.

8. Dispositif selon la revendication 7, **caractérisé en ce que** la deuxième patte (13) peut être expulsée de la buse d' injection (21, 22) par intermittence au moyen d'un dispositif de dosage (23).

9. Dispositif selon la revendication 7 ou 8, **caractérisé en ce que** la buse d'injection (21, 22) est montée mobile dans le récipient de coulé (14).

10. Dispositif selon la revendication 9, **caractérisé en ce que** sur la direction longitudinale (L) de la fente de coulée (15) sont disposées plusieurs buses d'injection l'une à coté de l'autre dans le récipient de coulée (14) buses qui peuvent être mises en mouvement simultanément ou individuellement.

11. Dispositif selon la revendication 9 ou 10, **caractérisé en ce que**, rapporté à la largeur (B) de la fente de coulée (15) sont disposées au moins deux buses d'injection (21, 22) l'une à coté de l'autre.

12. Dispositif selon une des revendications 9 à 11, **caractérisé en ce que** les buses d'injection (21, 22) sont disposées aux extrémités de perçage d'amené (24) qui sont guidées par une paroi latérale (17) du récipient de coulée (14) et sont montées de façon articulée sur cette paroi.

13. Dispositif selon la revendication 12, **caractérisé en ce que** les tubes d'amenés (24) peuvent être déplacés individuellement ou en groupe avec un manipulateur (20) disposé à l'extérieur du récipient de coulé (14).

14. Dispositif selon la revendication 10 et une des revendications 11 à 13, **caractérisé en ce qu'**au moins deux buses d'injection sont disposées l'une à coté de l'autre et mobiles de telle manière que, rapporté à la direction longitudinale (L) de la fente de coulé (15) elles peuvent se croiser.

15. Selon une des revendications 7 à 14, qui fait parti d'une machine (1) de fabrication de capsules destinée à fabriquer des capsules molles décorées à partir de deux bandes flexibles (3, 3') dans le procédé au moule rotatif.
